# EUROPEAN PATENT APPLICATION

(11) **EP 4 439 426 A2**
(43) Date of publication of application: **02.10.2024**
(21) Application number: 24194627.6
(22) Date of filing: 28.07.2023
(51) Int. Cl.: G06Q 10/08

(54) **SHIPPING AND LOGISTICS ANALYTICS AND PREDICTION SYSTEM**

(30) Priority: 01.08.2022 US 202263370104 P
(62) Divisional of application: 23188459.4
(71) Applicant: Paxafe, Inc., Indianapolis, IN 46204 (US); Preston, Ilya Michael, Indianapolis, IN 46204 (US)
(72) Inventor: PRESTON, Ilya Michael, Indianapolis 46204 (US); PARKER, Riley Graham, Indianapolis 46204 (US); SANGWAN, Sahil, Indianapolis 46204 (US); SEETHARAM, Ashok, Indianapolis 46204 (US)
(74) Representative: Murgitroyd & Company

(57) **Abstract**

A method comprises receiving a flat format electronic document including a graph representing sensor data over a time period, automatically determining, from text of the flat format electronic document, an upper threshold, a lower threshold, and an expected number of data points of the graph, identifying a region of the flat format electronic document corresponding to the graph based on the upper threshold and the lower threshold, extracting a cropped image of the graph, generating, using the cropped image of the graph, the upper threshold, the lower threshold, and the expected number of data points, a table including a set of digital data points, and outputting the table for at least one of storage, display, or further machine processing.

## Description

### BACKGROUND

Packages in transit often have particular requirements that must be maintained during their journeys. Requirements may include temperature, pressure, acceleration, force, etc. Some packages may be sensitive to acute or long term measurement ranges. Pharmaceuticals, perishables, and fragile objects are among some examples of packages that may have these types of requirements.

### SUMMARY

The invention is a method, machine-readable medium and system as defined in the appended claims.

### BRIEF DESCRIPTION OF THE DRAWINGS

In the drawings, which are not necessarily drawn to scale, like numerals may describe similar components in different views. Like numerals having different letter suffixes may represent different instances of similar components. The drawings illustrate generally, by way of example, but not by way of limitation, various embodiments discussed in the present document.
FIG. 1 illustrates a system for providing package sensor data in accordance with some embodiments.
FIG. 2 illustrates a data flow block diagram for providing sensor data related to a package in accordance with some embodiments.
FIG. 3 illustrates a diagram showing plot digitization from a graph of a flat format document in accordance with some embodiments.
FIG. 4 illustrates a diagram showing a sensor data dashboard for a package in accordance with some embodiments.
FIGS. 5-6 illustrate flowcharts showing techniques for real time monitoring of content of a package in accordance with some embodiments.
FIG. 7 illustrates a flowchart showing a technique for extracting sensor data from a graph in accordance with some embodiments.
FIG. 8 illustrates a flowchart showing a technique for real time access of sensor data from remote user interface in accordance with some embodiments.
FIG. 9 illustrates generally an example of a block diagram of a machine upon which any one or more of the techniques discussed herein may perform in accordance with some embodiments.

### DETAILED DESCRIPTION

Systems and techniques described herein may be used to monitor or receive information related to a package (e.g., a package in transit). The information may include sensed information, such as from a sensor that is inside the package (e.g., temperature, pressure, force, etc.). Perishable cargo owners often ship packages across multiple supply chain legs and may be unable to capture and map product shelf-life of an end-to-end shipment. This technical problem occurs due to the use of data loggers that cannot provide real-time information and disparate platforms with disconnected data sources. The systems and techniques described herein provide a technological solution to this problem by giving insights via a remaining stability budget that captures or provides product shelf life across multiple legs or devices of an end-to-end shipment. Real-time or comprehensive summaries may be provided to enable suppliers, manufacturers, or customers to know whether a product is safe and effective.

A product may be initially setup using a product configuration profile. A user may pre-configure a product profile, which may be customized for a customer or use-case, such as with specific temperature or stability budget thresholds. These profiles may be remotely applied to a device (e.g., a sensor device included in a package during shipping) while creating a new shipment in real-time. A shipment may be identified on a digital platform and a selected product configuration profile may be applied. In some examples, a unique Quick Response (QR) or other machine-readable code maybe generated, for example to track the stability budget of the shipment. The QR code may be applied (e.g., via a sticker or printing) outside of the package while in transit. The QR code may be scanned to provide tracking information related to the condition of the package without needing to open the package.

A remaining stability budget status indicator may be used to provide feedback to a user. This information may be accessed by scanning the QR code using a mobile phone camera or other device. The QR code may correspond to a sensor device within the package that may communicate (directly or over a network) information related to a status of the package to the scanning device. The QR code may present a link, which may be clicked on to open a browser page that displays the condition of the shipment. In some examples, the condition may be related to specified thresholds. The condition may be indicated numerically, visually, audibly, etc., such as using a message (e.g., green for within thresholds and red for outside of at least one threshold) or a more detailed stability budget, for example represented in percentage of remaining shelf life.

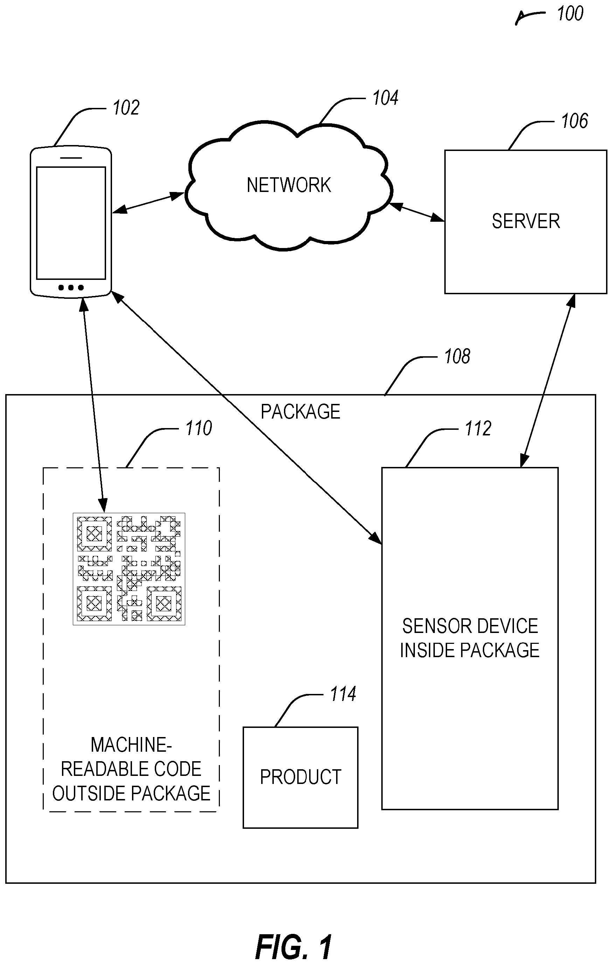

FIG. 1 illustrates a system 100 for providing package sensor data in accordance with some embodiments. The system 100 illustrates a mobile device 102 (e.g., a phone, a tablet, a laptop, etc.), but may include a non-mobile computing device instead of or in addition to the mobile device 102. The mobile device 102 may be used to communicate with a server 106, for example over a network 104 (e.g., the internet). The system 100 illustrates a package 108 (e.g., a parcel in transit) having a sensor device 112 inside the package and optionally a machine-readable code 110 on an outside portion of the package 108. The machine-readable code 110 may be affixed to the package 108 (e.g., via adhesive, such as printed on a sticker), may be printed directly on an outside wall of the package 108, or the like. The machine-readable code 110 may be associated with the sensor device 112 (e.g., via a pre-shipping registration, via user login, etc.). The machine-readable code 110 may include a QR code or other barcode (e.g., a one- or two-dimensional barcode).

The mobile device 102 may scan the machine-readable code 110 to access information about the package 108 (e.g., sensor data generated by the sensor device 112). In an example, the sensor device 112 captures sensor information (e.g., temperature) and sends the sensor information to the server 106. The mobile device 102 scans the machine-readable code 110, and in response to scanning the machine-readable code 110, the mobile device 102 accesses a website or mobile app. The website or mobile app may include information generated by the sensor device 112 received via the network 104 from the server 106. In some examples, the mobile device 102 may communicate directly with the sensor device 112.

The machine-readable code 110 may be used to access sensor information with or without user login at the mobile device 102. For example, on scanning, the mobile device 102 may display an indication of sensor information (e.g., the package has remained within a specified range or has not). In some examples, a login may be required before the mobile device 102 receives or is permitted to display the indication of sensor information.

In some examples, the mobile device 102 may access information related to the package 108 without using the machine-readable code 110. For example, the mobile device 102 may login to a website or mobile app to access information via the network 104 from the server 106, which may receive information from the sensor device 112. The sensor device 112 may communicate with the server 106 or the mobile device 102 via pushing information, based on a request for information, periodically, or the like. For example, the sensor device 112 may transmit information related to conditions inside the package 108 while the package 108 is in transit, which may include while the package 108 is moving (e.g., via ground transportation, air transportation, boat, etc.) or at rest (e.g., in a warehouse, at a port, etc.). In some examples, the sensor device 112 may log information and transmit according to network conditions, signal strength, bandwidth, memory usage, periodically, or the like.

The package 108 may be registered. Registration may include identifying a range of a sensed condition, such as temperature, pressure, force, acceleration, humidity, etc. For example, for a clinical study, the package 108 may include a product 114, such as medication, a vaccine, food, etc. The package 108 may travel from a main distribution center to a site (e.g., hospital, clinic, etc.). In this example, the package 108 may include a temperature range. The sensor device 112 may provide temperature information to the server 106, such as raw temperature data, an alert when the range is traversed, or the like. During registration, the machine-readable code 110 may be applied to the package 108 (e.g., printed, affixed, etc.). The machine-readable code 110 may be accessed by the mobile device 102 during transit of the package 108 (e.g., when the package 108 arrives at a particular location, such as a port, a distribution warehouse, an end delivery warehouse, a final destination, etc. The mobile device 102 may display an indication of whether the package 108 had a sensed condition that was outside of a specified range. In some examples, this indication may include a yes or no, a color indication (e.g., red for outside range, green for stayed within range), or the like. The range may include a time component, such as that the package 108 may be outside the range for a particular maximum amount of time without triggering an alert or rejection indication. In some examples, the maximum amount of time may be cumulative.

The mobile device 102 may display an alert, an indication of whether the package 108 stayed within specified parameters (e.g., range) or went outside of the range, a remaining shelf life of a product 114 within the package 108, sensor information, or the like. The shelf life may include a percentage shelf life remaining for the product 114 (e.g., X hours, days, weeks, months, years).
The machine-readable code 110 may be configured (e.g., at registration), such as to provide specific information, which may vary depending on what mobile device 102 or other device access the machine-readable code 110. For example, a non-logged in mobile device 102 may be able to display an out of range or in range indication via scanning the machine-readable code 110. A logged in mobile device 102 or specified device may be provided with more information. For example, a device of a site coordinator may be provided the shelf life remaining, and a device of an user (e.g., a patient) may be provided only an "ok" or "not ok" indication.

The sensor device 112 may include communication circuitry (e.g., a SIM card, a radio antenna, Wi-Fi antenna, Bluetooth, NFC, etc.) to communicate with the server 106, the mobile device 102, or other device. The sensor device 112 may include one or more sensors, such as a shock sensor, an accelerometer, a thermometer, a force sensor, a pressure sensor, a humidity sensor, or the like. The sensor device 112 may provide real-time or near real-time information (e.g., delayed by a few seconds, a minute, etc.) to the server 106, the mobile device 102, or other device.

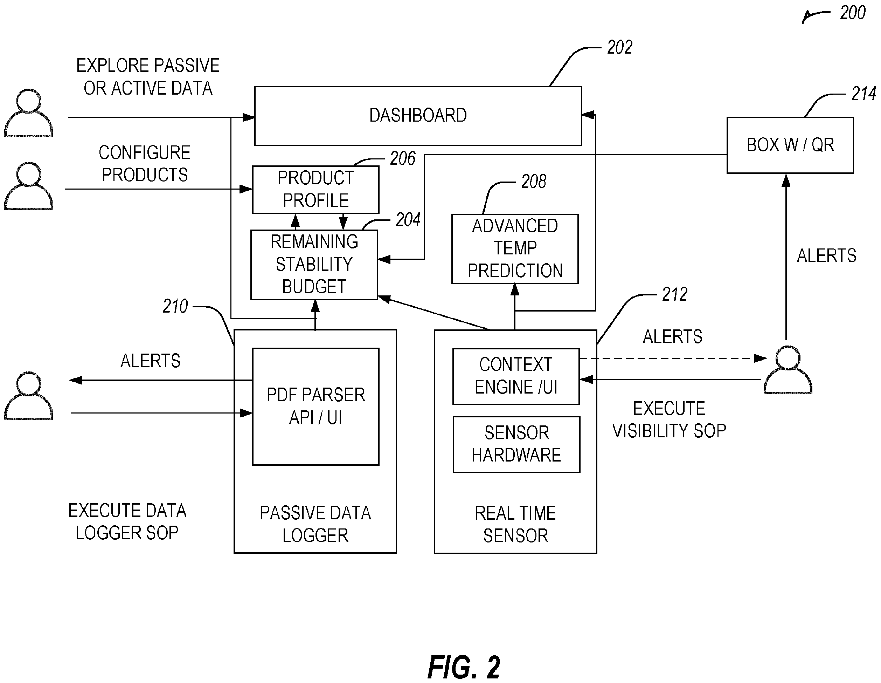

FIG. 2 illustrates a data flow block diagram 200 for providing sensor data related to a package in accordance with some embodiments. The data flow block diagram 200 illustrates how information may flow among the various devices used to communicate or capture sensor data. In some examples, a system (e.g., the system 100 of FIG. 1) may include a passive data logger 210 instead of or in addition to a sensor device 212. The data flow block diagram 200 shows both options, but one may be omitted.

The sensor device 212 may provide information to one or more components of a service (e.g., at a server). The one or more components may include a prediction model 208 (e.g., a temperature prediction model), a remaining stability budget component 204, or a dashboard 202. The components may share information in some examples (e.g., the prediction model 208 may provide information to the dashboard 202 or the remaining stability budget 204). The sensor device 212 may provide raw sensor data to the dashboard 202, the remaining stability budget component 204, or the prediction model 208. The prediction model 208 may be used to predict a likely future status of a package corresponding to the sensor device 212 (e.g., a package the sensor device 212 is located within). The prediction model 208 may output a predicted status or may output an alert (e.g., when a predicted status traverses a threshold or range). The remaining stability budget 204 may be displayed or output. The dashboard 202 may be used to provide detailed information, such as historical data, raw data, a prediction, a remaining stability budget, information for more than one package, or the like. The sensor device 212 may be associated with a machine-readable code 214, which may be affixed or printed on an outside of a package. The machine-readable code 214 may be used to access real-time or up to date information from the sensor device 212.

The passive data logger 210 may be located within a package and may collect sensor data during transit of the package. When the package is opened (e.g., at a final destination), the passive data logger 210 may be used to provide sensed data from throughout the journey of the package. The sensed data may be output as a flat format document (e.g., a portable document format document, hereinafter a PDF), which may be further processed to provide information to a user device. The passive data logger 210 may parse the PDF or may provide information to a processing device to parse the PDF. The PDF or parsed information may be provided to the remaining stability budget 204, the dashboard 202, or the like. A parser may generate electronic tabular data from a PDF. This may be linked with a remaining stability budget 206 to identify a remaining product shelf life. The parser may automatically calculate whether the product is still viable, such as based on the parsed data and a product profile 206 (e.g., as generated by a user before the product is in transit).

In some examples, a journey of a package in transit may include subsections. For example, the journey may be broken down into legs, such as two legs that use the passive data logger 210, and a third leg that uses real-time data from the sensor device 212. The legs of the journey may have different requirements in some examples for alerting purposes. For example, a first leg may have tighter temperature range restrictions than a last leg. In some examples, the dashboard 202, the remaining stability budget 204, or the scanned machine-readable code 214 may be used to provide a remaining stability budget automatically for a leg or for a total journey.

The machine-readable code 214 may be scanned (e.g., by a device) to receive an output from the remaining stability budget 204. The output may be a latest, real-time, or up to date remaining stability budget for the product. Over time, the remaining stability budget may be updated. In some examples, the device may receive updates automatically (e.g., when logged in), while in other examples, the device may need to rescan the machine-readable code 214 to receive an update.

In some examples, users of the dashboard 202 may include users that are exploring passive or active data, such as a quality leader, a quality analyst, or a user conducting a data review team (e.g., to choose a right package, eliminate temperature issues, etc.). A user that selects the product profile 206 may include a configure products user, such as a quality analyst or a product owner. These users may be accountable for the temperature or other sensed data ranges and may create, modify, or validate the product profile 206. The product profile 206 may be provided or modified using a webform, a spreadsheet, etc. An operations user may receive an alert or execute the passive data logger 210. These users may be responsible for quality at site or inbound receiving (e.g., operator at dock, at warehouse, pallet checker, etc.). A user who scans the machine-readable code 214 may include an operations user (e.g., as above), such as someone in an operational role in a receiving site or a patient, a pharmacist, a courier, or other end user or end delivery user to confirm the product is within tolerance. Other users of the features of the data flow block diagram 200 may include a responder to an alert (e.g., an internal or contracted control tower associate, such as a user that looks at a screen to see when something goes wrong, such as at a pharmaceutical company), such as a user charged with taking action in response to the alert, or a logistics provider reaction team to respond to the end client (e.g., a pharmaceutical company) to explain what is happening and what is being doing about the alert.

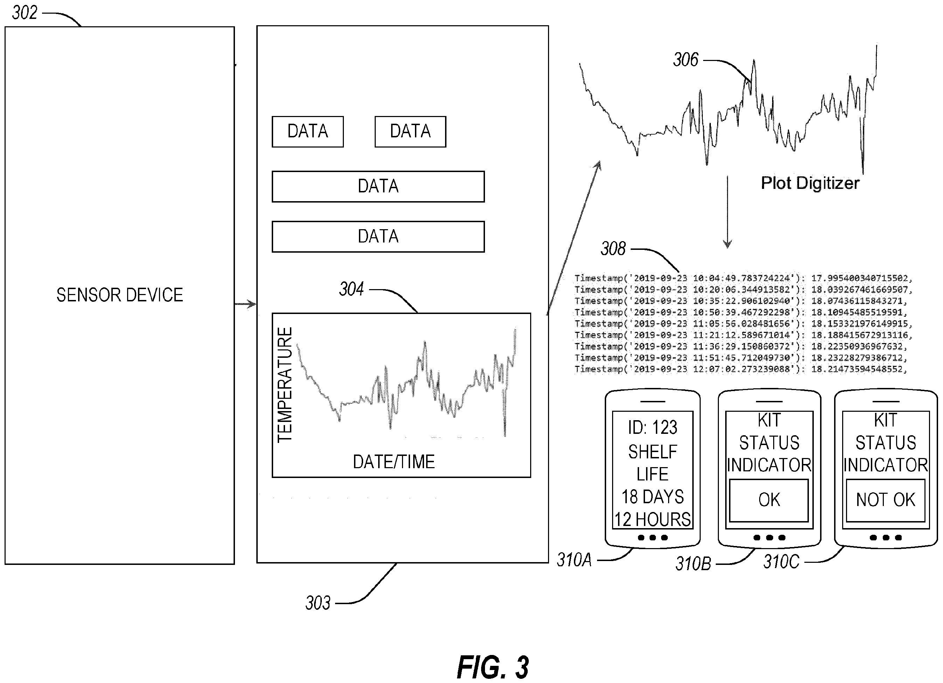

FIG. 3 illustrates a diagram showing plot digitization from a graph 304 of a flat format document 303 in accordance with some embodiments. The graph 304 is generated from sensor data collected by a sensor device 302 (e.g., a passive data logger). The graph 304 may be part of the flat format document 303 (e.g., a PDF). The flat format document 303 may not include information corresponding to datapoints of the graph 304.

A parser may be used to digitize the graph 304 into datapoints. The parser may convert the graph 304 to digital points according to timestamp and sensor value (e.g., temperature). The created data 308 may be used for prediction (e.g., temperature prediction). The parser may operate online, for example after plugging sensor device 302 into a computer or mobile device, such as via a cloud app (e.g., using an API). The parser may identify the graph 304 within the flat format document 303, extract information regarding the axes, and generate the datapoints 308. The parser may automatically provide the datapoints 308 or information corresponding to the datapoints 308 (e.g., an alert).

In some examples, a location of the graph 304 within the flat format document 303 may be predetermined (e.g., hard coded, such as based on a manufacturer of the sensor device 302 or flat format document 303 creator). The parser may determine fields in the flat format document 303, which may be specified by a user or automatically identified. The fields in the flat format document 303 may identify a transit start time, which may be used to label a first point on the graph 304, and a transit arrival time, which may be used to label a last point on the graph 304. The fields in the flat format document 303 may identify extreme sensor data (e.g., a highest temperature recorded and a lowest temperature recorded). These identified extrema may be used to align the y-axis of the graph 304. In other examples, ticks of the graph or temperature labels may be used to scale the graph. Preconfigured product data may have ranges for a product (e.g., temperature range, a time-based range, such as never exceeding a temperature x, or only between temperatures y and x for under two hours total or in a row, otherwise below temperature y, or the like).

The parser may read the flat format document 303, extract text, and convert the graph 304 to an image 306 as described above. The extracted text may include a device identifier, a serial number, a shipment identifier, a company, a startup delay (e.g., in minutes), a time interval (e.g., in minutes), a start time (e.g., in epoch time Coordinated Universal Time, UTC), an end time (e.g., in epoch time UTC), a number of points, an alarm configuration (e.g., including a range or allowed time, for example in minutes), or the like.

After the text related information is extracted, the parser may convert the image 306 to an ultra high resolution image. The image 306 may be cropped or converted to grayscale. The image 306 may be cropped or converted to grayscale based on specified pixel coordinates, in some examples. The parser may remove grid lines or other background information in the flat format document 303 to generate the image 306. The image 306 may be processed to include only white (color 255), black (color 0) or a derivative of white and black (e.g., light grey to dark grey between 1 and 254), in some examples. To remove the grid lines, the parser may iterate through rows of pixels (e.g., top to bottom) and look for rows that include more black pixels than white pixels. For example, when a row includes more than a threshold number of black pixels (e.g., more than 70% of black pixels), the row may be characterized as a grid line. This row may then have its pixels changed to white, eliminating the horizontal grid lines. The same technique may be done iterating through columns (e.g., going from left to right) to eliminate the vertical grid lines. After removing grid lines, the image 306 includes only the curve and potentially some missing gaps along the curve caused due to eliminating the grid lines. In some examples, such as when two or more (or a specified number) of consecutive lines have more than a threshold number of black pixels (e.g., more than 70%), the consecutive lines may be trigger an alarm based on an alarm threshold.

The pixel column values may be iterated through to find a median value. For example, every column with predominantly 255 in it is primarily white in color. However, a few pixels (cells) may be black in color (e.g., 0 or very close to 0), which are the pixels representing the curve. In ideal conditions, only one cell in every column is black in color, representing a single point on the curve. In practice, since the image is an ultra high resolution image, some (e.g., 3-4) pixels (cells) may be near black in color representing a single point on the curve. To improve the image 306, the parser may use a median value of the black colored pixels in every column. This leaves the image 306 with a single pixel in every column representing a single point on the curve. In an example, a binary search algorithm may be used to find a location (e.g., a pixel or point0 in the vertical column where a number of pixels to the left and the right that are black or colored by the line are most equal. The binary search algorithm may output a center of the line.

The parser may fill in gaps in the curve and align axes, in some examples. The curve may be represented by one black pixel in every column. In some examples, some columns may have no black pixels due to the grid line elimination process described above. These columns may instead leave a white gap in the curve. These white gaps may be filled by taking an average value of a pixel immediately preceding the white gap and a pixel immediately succeeding the white gap. This process leaves a smooth curve in the image 306 with no white gaps and a black pixel in every column. The axes may be aligned by assigning a pixel at a bottom left corner as an origin with the minimum value of temperature on the y-axis and the shipment start time on the x-axis. A pixel at a bottom right corner may be assigned the shipment end time on the x-axis. A pixel at a top left corner may be assigned a highest temperature recorded on the y-axis. This provides the (x,y) values of the three extremes of the image 306 along with the number of points on the graph (given by the number of columns from left to right). The change in a number of minutes represented by moving one pixel along the x-axis may be calculated using the total time in transit. Similarly, the change in number of degrees Celsius (or other sensor data) represented by one pixel moving along the y-axis may be calculated from the temperature extrema. Using these calculations, the (x,y) information for all pixels in the image 308 may be determined. The parser may extract corresponding (x,y) locations representative of (timestamp, temperature) values for each black pixel of the image 306 to generate the datapoints 308. An output from the parser may include the datapoints 308.

The parser may generate an output using the datapoints 308. The output may include a report, an alert, an indication, or the like. For example, the parser may provide details corresponding to the datapoints 308 to a mobile device. The mobile device may display the details in a user interface, such as at displays 310A, 310B, or 310C. Display 310A illustrates a remaining shelf life (e.g., days, hours, minutes, percentage time remaining, or the like) of a product corresponding to the datapoints 308. Display 310A may include further details, such as a current temperature, a current location, a last update time or day, etc. Display 310A may include an alert, such as when one or more of the datapoints 308 indicate a deviation from a specified sensor range. The alert may include a push notification (e.g., from an app), an email, a text message, an audible alert, haptic feedback, etc.

Displays 310B and 310C represent simple views corresponding to an indication of whether the product associated with the datapoints 308 is acceptable (e.g., the datapoints 308 did not deviate outside of a specified range of sensor values) in display 3 10B, or unacceptable in display 310C (e.g., the datapoints 308 did include a deviation). Display 310A may include use of a mobile app or login at a website in some examples. Displays 310B and 310C may not require the use of a mobile app or login at a website, in some examples (e.g., these displays may be accessed by scanning a machine-readable code, as described herein).

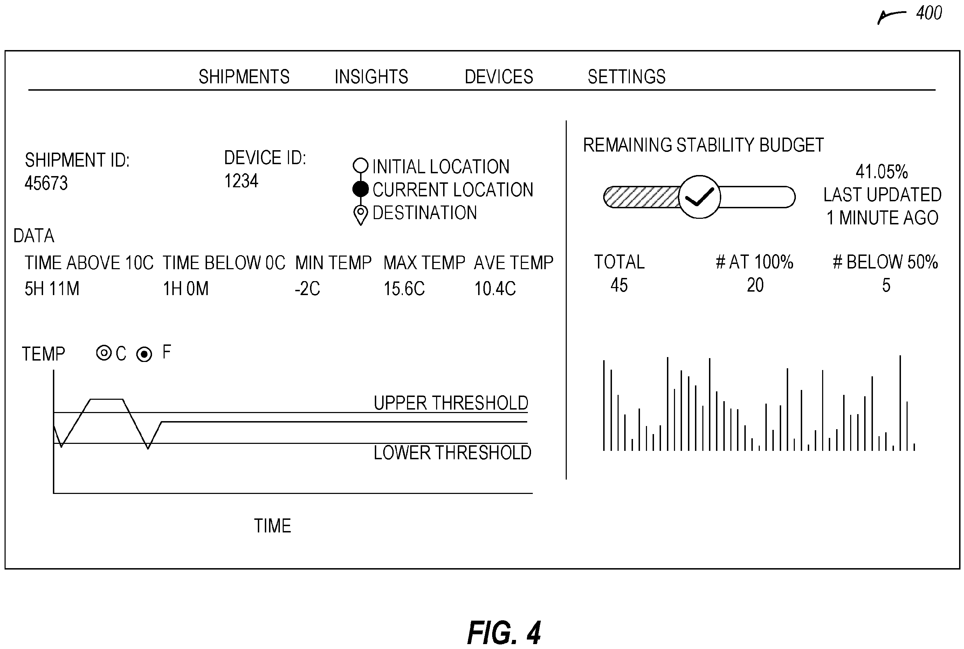

FIG. 4 illustrates a diagram showing a sensor data dashboard 400 for a package in accordance with some embodiments. The sensor data dashboard 400 may include a visual representation of sensed data over time (e.g., temperature), time in transit of the package, sensed data range, average or median sensed data, location of the package, remaining stability budget (e.g., in percentage or time), or the like. In some examples, the sensor data dashboard 400 may include information on more than one package in transit (e.g., a set of packages for a logged in user). Information on the sensor data dashboard 400 may be generated using the passive data logger 210 or the sensor device 212 of FIG. 2, in some examples.

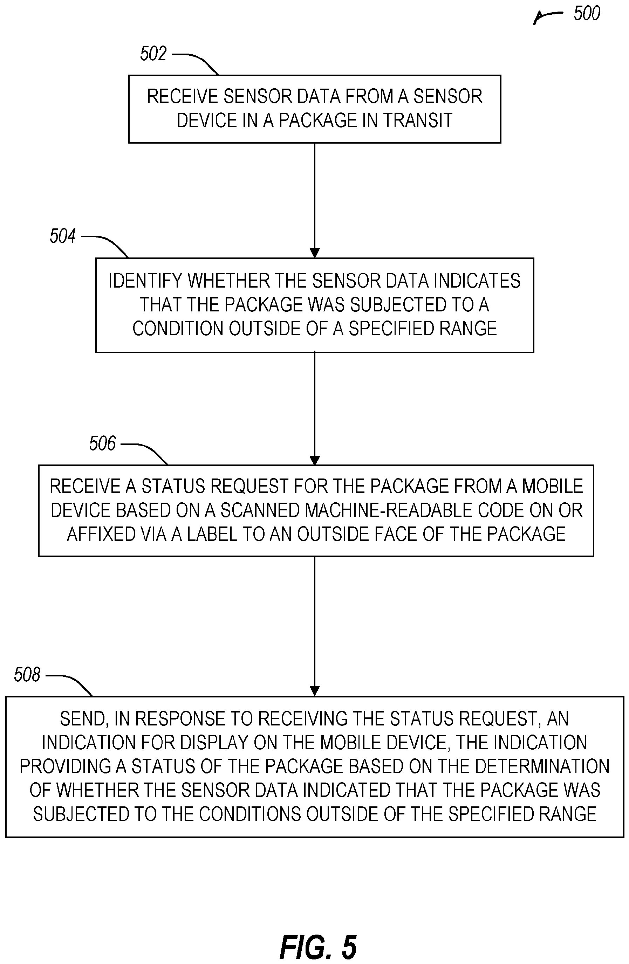

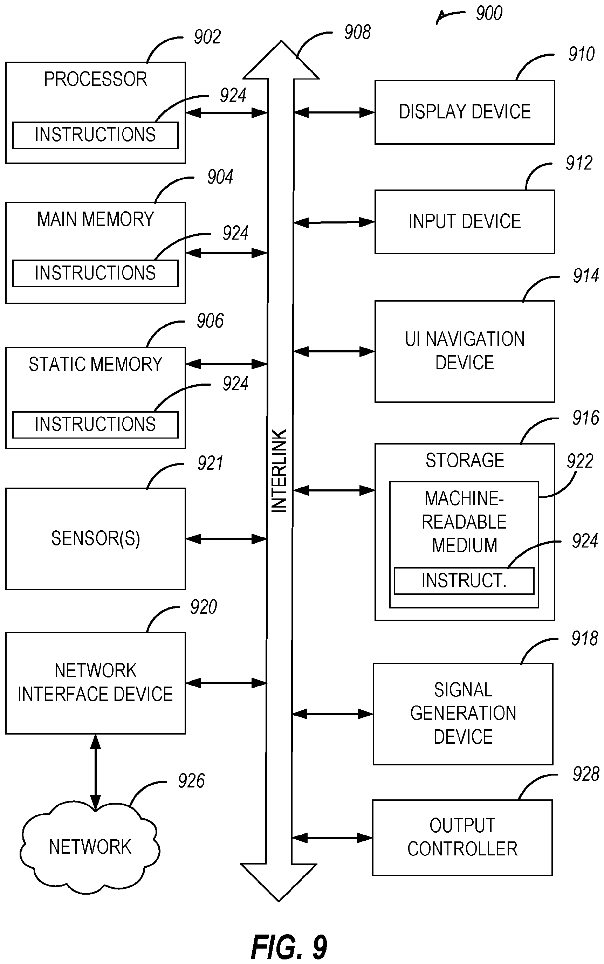

FIG. 5 illustrates a flowchart showing a technique 500 for real time monitoring of content of a package in accordance with some embodiments. In an example, operations of the technique 500 may be performed by processing circuitry, for example by executing instructions stored in memory. The processing circuitry may include a processor, a system on a chip, or other circuitry (e.g., wiring). For example, technique 500 may be performed by processing circuitry of a server, mobile device, computer, or the like (or one or more hardware or software components thereof), such as those illustrated and described with reference to FIG. 9.

The technique 500 includes an operation 502 to receive sensor data from a sensor device in a package in transit, for example at a server. The sensor data may be sent from a first wireless telecommunications transmitter of a sensor device inside the package.

The technique 500 includes an operation 504 to identify whether the sensor data indicates that the package was subjected to a condition outside of a specified range. In some examples, the sensor data includes at least one of temperature data or shock data. Operation 504 may include determining, at the server, whether the sensor data indicates that content in the package was subjected to the condition outside of a specified range. In some examples, operation 504 includes receiving a determination from the sensor device as to whether the sensor data indicates that the package was subjected to the condition outside of a specified range.

The technique 500 includes an operation 506 to receive, for example at the server, a status request for the package from a mobile device (e.g., from a wireless telecommunications transmitter of the mobile device) based on a scanned machine-readable code on or affixed via a label to an outside face of the package. The machine-readable code may include an optically readable two-dimensional QR code. The status request may be sent from the mobile device via a Uniform Resource Locator (URL) generated from the machine-readable code. The machine-readable code may be linked to the sensor device by the server and affixed to the package via an adhesive sticker.

The technique 500 includes an operation 508 to send, in response to receiving the status request, an indication for display on the mobile device, the indication providing a status of the package based on the determination of whether the sensor data indicated that the package was subjected to the condition outside of the specified range. In an example, he indication may indicate whether the content in the package remained within the specified range or experienced a condition outside the specified range (e.g., according to a specified profile for the package). In this example, the indication may indicate that the content in the package experienced a condition outside the specified range, the indication includes an instruction, to be displayed at the mobile device, to return the package. In some examples, the indication may include a percentage shelf life remaining for the package to be displayed on the mobile device.

The technique 500 may include determining at the server, based on the status request or an identifier of the mobile device, whether to send additional information in the indication. In some examples, the technique 500 may include receiving the specified range at the server before the package is in transit, the specified range being particular to at least one of a content type or a package type of the package.

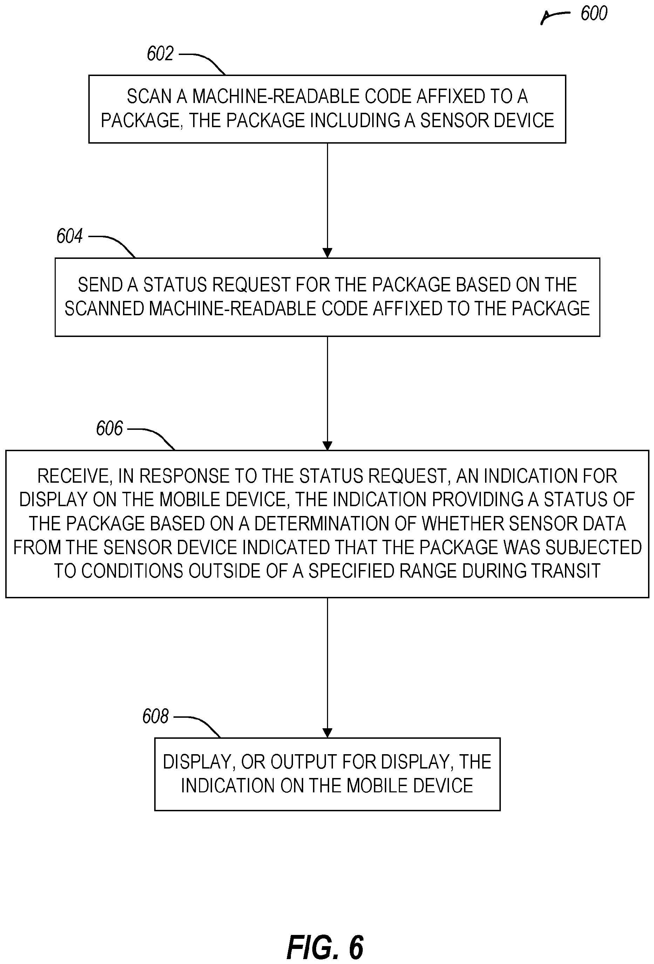

FIG. 6 illustrates a flowchart showing a technique 600 for real time monitoring of content of a package in accordance with some embodiments. In an example, operations of the technique 600 may be performed by processing circuitry, for example by executing instructions stored in memory. The processing circuitry may include a processor, a system on a chip, or other circuitry (e.g., wiring). For example, technique 600 may be performed by processing circuitry of a server, mobile device, computer, or the like (or one or more hardware or software components thereof), such as those illustrated and described with reference to FIG. 9.

The technique 600 includes an operation 602 to scan, for example at a mobile device, a machine-readable code affixed to a package, the package including a sensor device.

The technique 600 includes an operation 604 to send, for example to a server, a status request for the package based on the scanned machine-readable code affixed to the package.

The technique 600 includes an operation 606 to receive, in response to the status request, an indication for display on the mobile device, the indication providing a status of the package based on a determination of whether sensor data from the sensor device indicated that the package was subjected to conditions outside of a specified range during transit.

The technique 600 includes an operation 608 to display, or output for display, the indication on the mobile device.

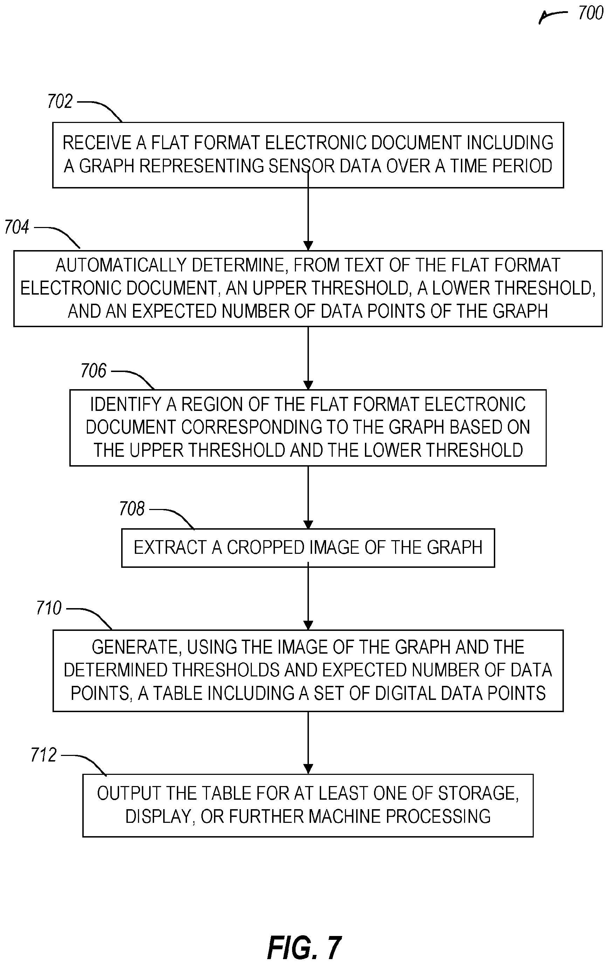

FIG. 7 illustrates a flowchart showing a technique 700 for extracting sensor data from a graph in accordance with some embodiments. In an example, operations of the technique 700 may be performed by processing circuitry, for example by executing instructions stored in memory. The processing circuitry may include a processor, a system on a chip, or other circuitry (e.g., wiring). For example, technique 700 may be performed by processing circuitry of a server, mobile device, computer, or the like (or one or more hardware or software components thereof), such as those illustrated and described with reference to FIG. 9.

The technique 700 includes an operation 702 to receive a flat format electronic document including a graph representing sensor data over a time period. The sensor data may include temperature, shock, acceleration, pressure data, or the like. The technique 700 includes an operation 704 to automatically determine, from text of the flat format electronic document, an upper threshold, a lower threshold, and an expected number of data points of the graph.

The technique 700 includes an operation 706 to identify a region of the flat format electronic document corresponding to the graph based on the upper threshold and the lower threshold. The technique 700 includes an operation 708 to extract a cropped image of the graph.

The technique 700 includes an operation 710 to generate, using the image of the graph and the determined thresholds and expected number of data points, a table including a set of digital data points. The technique 700 includes an operation 712 to output the table for at least one of storage, display, or further machine processing. Operation 712 may include displaying the table on a user interface.

In an example, the technique 700 includes determining whether the upper threshold exceeded an allowable upper threshold. In this example, the technique 700 may include displaying, in response to determining that the upper threshold exceeded the allowable upper threshold, an indication to reject a package corresponding to the sensor data. In this example, the allowable upper threshold may be a temperature threshold generated using a temperature profile specific to content in the package.

The technique 700 may include determining whether the lower threshold traversed an allowable lower threshold. In response to determining that the lower threshold traversed the allowable lower threshold, the technique 700 may include displaying an indication to reject a package corresponding to the sensor data. The allowable lower threshold may be a temperature threshold generated using a temperature profile specific to the package.

The technique 700 may include automatically determining, from the text of the flat format document, a start time and an end time of the graph. In this example, the technique 700 may further include determining, based on the start time and the end time, whether a total time represented by the graph exceeds an allotted time, and in response to determining that the total time exceeds the allotted time, outputting an alert. The set of digital data points may include timestamp labels generated based on the start time and the end time.

The technique 700 may include before generating the table, converting the cropped image to greyscale and removing gridline from the graph. In an example, the technique 700 includes before generating the table, determining a median value of occupied pixels in each pixel-wide column of the cropped image. In some examples, the technique 700 includes before generating the table, interpolating a gap in the graph and aligning axes of the graph.

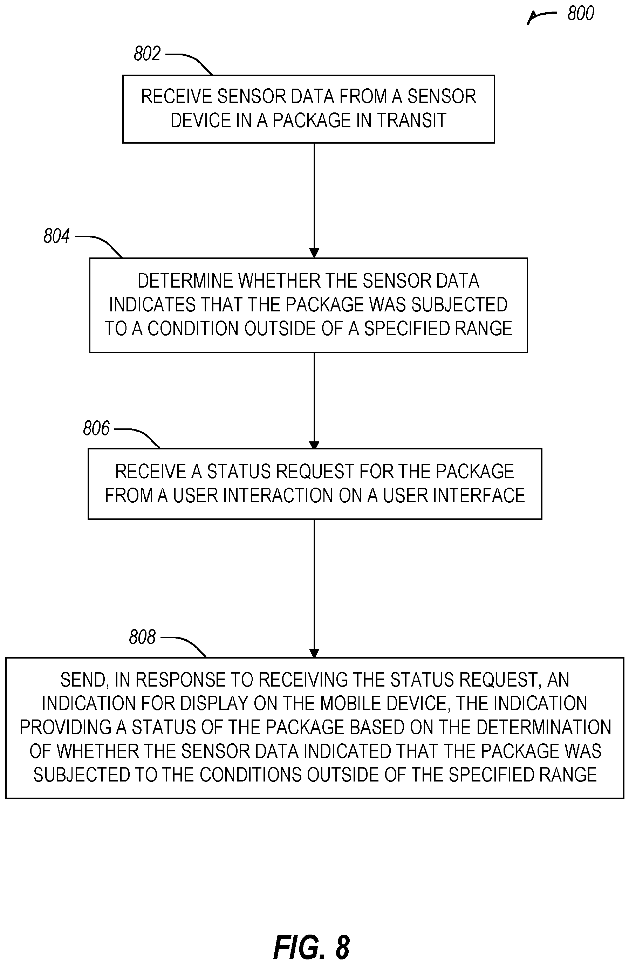

FIG. 8 illustrates a flowchart showing a technique 800 for real time access of sensor data from remote user interface in accordance with some embodiments. In an example, operations of the technique 800 may be performed by processing circuitry, for example by executing instructions stored in memory. The processing circuitry may include a processor, a system on a chip, or other circuitry (e.g., wiring). For example, technique 800 may be performed by processing circuitry of a server, mobile device, computer, or the like (or one or more hardware or software components thereof), such as those illustrated and described with reference to FIG. 9.

The technique 800 includes an operation 802 to receive sensor data from a sensor device in a package in transit.

The technique 800 includes an operation 804 to determine whether the sensor data indicates that the package was subjected to a condition outside of a specified range.

The technique 800 includes an operation 806 to receive a status request for the package from a user interaction on a user interface.

The technique 800 includes an operation 808 to send, in response to receiving the status request, an indication for display on the mobile device, the indication providing a status of the package based on the determination of whether the sensor data indicated that the package was subjected to the conditions outside of the specified range.

FIG. 9 illustrates generally an example of a block diagram of a machine 900 upon which any one or more of the techniques (e.g., methodologies) discussed herein may perform in accordance with some embodiments, such as computing device 102, server 106, sensor device 112, or a device operating in the network 104. In some embodiments, the machine 900 may operate as a standalone device or may be connected (e.g., networked) to other machines. In a networked deployment, the machine 900 may operate in the capacity of a server machine, a client machine, or both in server-client network environments. In an example, the machine 900 may act as a peer machine in peer-to-peer (P2P) (or other distributed) network environment. The machine 900 may be a personal computer (PC), a tablet PC, a set-top box (STB), a personal digital assistant (PDA), a mobile telephone, a web appliance, a network router, switch or bridge, or any machine capable of executing instructions (sequential or otherwise) that specify actions to be taken by that machine. Further, while only a single machine is illustrated, the term "machine" shall also be taken to include any collection of machines that individually or jointly execute a set (or multiple sets) of instructions to perform any one or more of the methodologies discussed herein, such as cloud computing, software as a service (SaaS), other computer cluster configurations.

Examples, as described herein, may include, or may operate on, logic or a number of components, modules, or mechanisms. Modules are tangible entities (e.g., hardware) capable of performing specified operations when operating. A module includes hardware. In an example, the hardware may be specifically configured to carry out a specific operation (e.g., hardwired). In an example, the hardware may include configurable execution units (e.g., transistors, circuits, etc.) and a computer readable medium containing instructions, where the instructions configure the execution units to carry out a specific operation when in operation. The configuring may occur under the direction of the execution units or a loading mechanism. Accordingly, the execution units are communicatively coupled to the computer readable medium when the device is operating. In this example, the execution units may be a member of more than one module. For example, under operation, the execution units may be configured by a first set of instructions to implement a first module at one point in time and reconfigured by a second set of instructions to implement a second module.

Machine (e.g., computer system) 900 may include a hardware processor 902 (e.g., a central processing unit (CPU), a graphics processing unit (GPU), a hardware processor core, or any combination thereof), a main memory 904 and a static memory 906, some or all of which may communicate with each other via an interlink (e.g., bus) 908. The machine 900 may further include a display unit 910, an alphanumeric input device 912 (e.g., a keyboard), and a user interface (UI) navigation device 914 (e.g., a mouse). In an example, the display unit 910, alphanumeric input device 912 and UI navigation device 914 may be a touch screen display. The machine 900 may additionally include a storage device (e.g., drive unit) 916, a signal generation device 918 (e.g., a speaker), a network interface device 920, and one or more sensors 921, such as a global positioning system (GPS) sensor, compass, accelerometer, or other sensor. The machine 900 may include an output controller 928, such as a serial (e.g., universal serial bus (USB), parallel, or other wired or wireless (e.g., infrared (IR), near field communication (NFC), etc.) connection to communicate or control one or more peripheral devices (e.g., a printer, card reader, etc.).

The storage device 916 may include a machine readable medium 922 that is non-transitory on which is stored one or more sets of data structures or instructions 924 (e.g., software) embodying or utilized by any one or more of the techniques or functions described herein. The instructions 924 may also reside, completely or at least partially, within the main memory 904, within static memory 906, or within the hardware processor 902 during execution thereof by the machine 900. In an example, one or any combination of the hardware processor 902, the main memory 904, the static memory 906, or the storage device 916 may constitute machine readable media.

While the machine readable medium 922 is illustrated as a single medium, the term "machine readable medium" may include a single medium or multiple media (e.g., a centralized or distributed database, or associated caches and servers) configured to store the one or more instructions 924.

The term "machine readable medium" may include any medium that is capable of storing, encoding, or carrying instructions for execution by the machine 900 and that cause the machine 900 to perform any one or more of the techniques of the present disclosure, or that is capable of storing, encoding or carrying data structures used by or associated with such instructions. Non-limiting machine-readable medium examples may include solid-state memories, and optical and magnetic media. Specific examples of machine- flat format readable media may include: non-volatile memory, such as semiconductor memory devices (e.g., Electrically Programmable Read-Only Memory (EPROM), Electrically Erasable Programmable Read-Only Memory (EEPROM)) and flash memory devices; magnetic disks, such as internal hard disks and removable disks; magneto-optical disks; and CD-ROM and DVD-ROM disks.

The instructions 924 may further be transmitted or received over a communications network 926 using a transmission medium via the network interface device 920 utilizing any one of a number of transfer protocols (e.g., frame relay, internet protocol (IP), transmission control protocol (TCP), user datagram protocol (UDP), hypertext transfer protocol (HTTP), etc.). Example communication networks may include a local area network (LAN), a wide area network (WAN), a packet data network (e.g., the Internet), mobile telephone networks (e.g., cellular networks), Plain Old Telephone (POTS) networks, and wireless data networks (e.g., Institute of Electrical and Electronics Engineers (IEEE) 802.11 family of standards known as Wi-Fi^{®}, IEEE 802.16 family of standards known as WiMax^{®}), IEEE 802.15.4 family of standards, peer-to-peer (P2P) networks, among others. In an example, the network interface device 920 may include one or more physical jacks (e.g., Ethernet, coaxial, or phone jacks) or one or more antennas to connect to the communications network 926. In an example, the network interface device 920 may include a plurality of antennas to wirelessly communicate using at least one of single-input multiple-output (SIMO), multiple-input multiple-output (MIMO), or multiple-input single-output (MISO) techniques. The term "transmission medium" shall be taken to include any intangible medium that is capable of storing, encoding or carrying instructions for execution by the machine 900, and includes digital or analog communications signals or other intangible medium to facilitate communication of such software.

Example 1 is a method comprising: receiving, at a server, sensor data sent from a first wireless telecommunications transmitter of a sensor device inside a package in transit, located together with content in the package; identifying whether the sensor data indicates that the content in the package was subjected to a condition outside of a specified range; receiving, at the server, a status request for the package sent from a second wireless telecommunications transmitter of a mobile device based on a scanned machine-readable code on or affixed via a label to an outside face of the package; and sending, in response to receiving the status request, an indication for display on the mobile device, the indication providing a status of the package based on the determination of whether the sensor data indicated that the package was subjected to the condition outside of the specified range.

In Example 2, the subject matter of Example 1 includes, wherein the machine-readable code includes an optically readable two-dimensional QR code.

In Example 3, the subject matter of Examples 1-2 includes, wherein the status request is sent from the mobile device via a URL generated from the machine-readable code.

In Example 4, the subject matter of Examples 1-3 includes, wherein the sensor data includes at least one of temperature data or shock data.

In Example 5, the subject matter of Examples 1-4 includes, wherein the indication indicates whether the content in the package remained within the specified range or experienced a condition outside the specified range.

In Example 6, the subject matter of Example 5 includes, wherein when the indication indicates that the content in the package experienced a condition outside the specified range, the indication includes an instruction, to be displayed at the mobile device, to return the package.

In Example 7, the subject matter of Examples 1-6 includes, wherein the indication includes a percentage shelf life remaining for the package to be displayed on the mobile device.

In Example 8, the subject matter of Examples 1-7 includes, determining at the server, based on the status request or an identifier of the mobile device, whether to send additional information in the indication.

In Example 9, the subject matter of Examples 1-8 includes, receiving the specified range at the server before the package is in transit, the specified range being particular to at least one of a content type or a package type of the package.

In Example 10, the subject matter of Examples 1-9 includes, wherein the machine-readable code is linked to the sensor device by the server and affixed to the package via an adhesive sticker.

In Example 11, the subject matter of Examples 1-10 includes, wherein identifying whether the sensor data indicates that content in the package was subjected to the condition outside of a specified range includes determining, at the server, whether the sensor data indicates that content in the package was subjected to the condition outside of a specified range.

In Example 12, the subject matter of Examples 1-11 includes, wherein identifying whether the sensor data indicates that the content in the package was subjected to the condition outside of a specified range includes receiving a determination from the sensor device as to whether the sensor data indicates that the package was subjected to the condition outside of a specified range.

Example 13 is a system comprising: a sensor device comprising: at least one sensor to measure a condition of content inside a package while the package is in transit; and an antenna to send, to a server via a telecommunications network, sensor data generated by the at least one sensor during the transit; and a decal configured to be affixed to an outside surface of the package, the decal including a machine-readable code corresponding to a sensor data retrieval message, which when scanned by a mobile device causes the mobile device to display information about the sensor data from the at least one sensor.

In Example 14, the subject matter of Example 13 includes, wherein the machine-readable code includes an optically readable two-dimensional QR code.

In Example 15, the subject matter of Examples 13-14 includes, wherein the sensor data includes at least one of temperature data or shock data.

In Example 16, the subject matter of Examples 13-15 includes, wherein the indication includes a percentage shelf life remaining for the package to be displayed on the mobile device.

Example 17 is at least one machine-readable medium including instructions, which when executed by processing circuitry of a server, cause the processing circuitry to: receive sensor data sent from a first wireless telecommunications transmitter of a sensor device inside a package in transit, located together with content in the package; identify whether the sensor data indicates that the content in the package was subjected to a condition outside of a specified range; receive a status request for the package sent from a second wireless telecommunications transmitter of a mobile device based on a scanned machine-readable code on or affixed via a label to an outside face of the package; and send, in response to receiving the status request, an indication for display on the mobile device, the indication providing a status of the package based on the determination of whether the sensor data indicated that the package was subjected to the condition outside of the specified range.

In Example 18, the subject matter of Example 17 includes, wherein the machine-readable code includes an optically readable two-dimensional QR code.

In Example 19, the subject matter of Examples 17-18 includes, wherein the status request is sent from the mobile device via a URL generated from the machine-readable code.

In Example 20, the subject matter of Examples 17-19 includes, wherein the machine-readable code is linked to the sensor device by the server and affixed to the package via an adhesive sticker.

Example 21 is a method comprising: scanning, at a mobile device, a machine-readable code on or affixed to an outside of a package, the machine-readable code corresponding to a sensor device located with content inside the package; sending, to a server, a status request for the package based on the scanned machine-readable code on or affixed to the outside of the package; receiving, in response to the status request, an indication for display on the mobile device, the indication providing a status of the package based on a determination of whether sensor data from the sensor device indicated that content in the package was subjected to a condition outside of a specified range during transit; and displaying the indication on the mobile device.

In Example 22, the subject matter of Example 21 includes, wherein scanning the machine-readable code includes using a camera of the mobile device.

In Example 23, the subject matter of Examples 21-22 includes, wherein scanning the machine-readable code includes scanning without requiring using a dedicated application for status display.

Example 24 is a method comprising: receiving a flat format electronic document including a graph representing sensor data over a time period; automatically determining, from text of the flat format electronic document, an upper threshold, a lower threshold, and an expected number of data points of the graph; identifying a region of the flat format electronic document corresponding to the graph based on the upper threshold and the lower threshold; extracting a cropped image of the graph; generating, using the image of the graph and the determined thresholds and expected number of data points, a table including a set of digital data points; and outputting the table for at least one of storage, display, or further machine processing.

In Example 25, the subject matter of Example 24 includes, determining whether the upper threshold exceeded an allowable upper threshold.

In Example 26, the subject matter of Example 25 includes, in response to determining that the upper threshold exceeded the allowable upper threshold, display an indication to reject a package corresponding to the sensor data.

In Example 27, the subject matter of Example 26 includes, wherein the allowable upper threshold is a temperature threshold generated using a temperature profile specific to content in the package.

In Example 28, the subject matter of Examples 24-27 includes, determining whether the lower threshold traversed an allowable lower threshold.

In Example 29, the subject matter of Example 28 includes, in response to determining that the lower threshold traversed the allowable lower threshold, display an indication to reject a package corresponding to the sensor data.

In Example 30, the subject matter of Examples 26-29 includes, wherein the allowable lower threshold is a temperature threshold generated using a temperature profile specific to the package.

In Example 31, the subject matter of Examples 24-30 includes, wherein outputting the table includes displaying the table on a user interface.

In Example 32, the subject matter of Examples 24-31 includes, automatically determining, from the text of the flat format document, a start time and an end time of the graph.

In Example 33, the subject matter of Example 32 includes, determining, based on the start time and the end time, whether a total time represented by the graph exceeds an allotted time, and in response to determining that the total time exceeds the allotted time, outputting an alert.

In Example 34, the subject matter of Examples 32-33 includes, wherein the set of digital data points include timestamp labels generated based on the start time and the end time.

In Example 35, the subject matter of Examples 24-34 includes, before generating the table, converting the cropped image to greyscale and removing gridline from the graph.

In Example 36, the subject matter of Examples 24-35 includes, before generating the table, determining a median value of occupied pixels in each pixel-wide column of the cropped image.

In Example 37, the subject matter of Examples 24-36 includes, before generating the table, interpolating a gap in the graph and aligning axes of the graph.

In Example 38, the subject matter of Examples 24-37 includes, wherein the sensor data includes temperature, shock, acceleration, or pressure data.

Example 39 is at least one machine-readable medium including instructions that, when executed by processing circuitry, cause the processing circuitry to perform operations to implement of any of Examples 1-38.

Example 40 is an apparatus comprising means to implement of any of Examples 1-38.

Example 41 is a system to implement of any of Examples 1-38.

Example 42 is a method to implement of any of Examples 1-38.

Method examples described herein may be machine or computer-implemented at least in part. Some examples may include a computer-readable medium or machine-readable medium encoded with instructions operable to configure an electronic device to perform methods as described in the above examples. An implementation of such methods may include code, such as microcode, assembly language code, a higher-level language code, or the like. Such code may include computer readable instructions for performing various methods. The code may form portions of computer program products. Further, in an example, the code may be tangibly stored on one or more volatile, non-transitory, or non-volatile tangible computer-readable media, such as during execution or at other times. Examples of these tangible computer-readable media may include, but are not limited to, hard disks, removable magnetic disks, removable optical disks (e.g., compact disks and digital video disks), magnetic cassettes, memory cards or sticks, random access memories (RAMs), read only memories (ROMs), and the like.

## Claims

**1.** A method comprising:
receiving (702) a flat format electronic document including a graph representing sensor data over a time period;
automatically determining (704), from text of the flat format electronic document, an upper threshold, a lower threshold, and an expected number of data points of the graph;
identifying (706) a region of the flat format electronic document corresponding to the graph based on the upper threshold and the lower threshold;
extracting (708) a cropped image of the graph;
generating (710), using the cropped image of the graph, the upper threshold, the lower threshold, and the expected number of data points, a table including a set of digital data points; and
outputting (712) the table for at least one of storage, display, or further machine processing.

**2.** The method of claim 1, further comprising, determining whether the upper threshold exceeded an allowable upper threshold, and in response to determining that the upper threshold exceeded the allowable upper threshold, display an indication to reject a package corresponding to the sensor data; and optionally, wherein the allowable upper threshold is a temperature threshold generated using a temperature profile specific to content in the package.

**3.** The method of claim 1 or claim 2, further comprising, determining whether the lower threshold traversed an allowable lower threshold, wherein the allowable lower threshold is a temperature threshold generated using a temperature profile specific to the package.

**4.** The method of claim 3, wherein ad in response to determining that the lower threshold traversed the allowable lower threshold, display an indication to reject a package corresponding to the sensor data, and optionally,

**5.** The method of any one of claims 1 to 4, wherein outputting the table includes displaying the table on a user interface.

**6.** The method of any one of claims 1 to 5, further comprising automatically determining, from the text of the flat format electronic document, a start time and an end time of the graph.

**7.** The method of claim 6, further comprising, determining, based on the start time and the end time, whether a total time represented by the graph exceeds an allotted time, and in response to determining that the total time exceeds the allotted time, outputting an alert.

**8.** The method of claim 6, wherein the set of digital data points include timestamp labels generated based on the start time and the end time.

**9.** The method of any one of claims 1 to 8, further comprising, before generating the table, converting the cropped image to grayscale, and removing gridlines from the graph.

**10.** The method of any one of claims 1 to 9, further comprising, before generating the table, determining a median value of occupied pixels in each pixel-wide column of the cropped image.

**11.** The method of any one of claims 1 to 10, further comprising, before generating the table, interpolating a gap in the graph, and aligning axes of the graph.

**12.** The method of any of claims 1 to 11, wherein the sensor data includes temperature, shock, acceleration, or pressure data.

**13.** At least one machine-readable medium including instructions for operation of a computing system, which when executed by a machine, cause the machine to perform operations of any of the methods of claims 1 to 12.

**13.** A system comprising:
processing circuitry; and
memory, including instructions, which when executed by the processing circuitry, causes the processing circuitry to carry out the method of any one of claims 1 to 12.
